Europäisches Patentamt

European Patent Office

Office européen des brevets

(19)

(11) Publication number: **0 189 074**
**B1**

(12) EUROPEAN PATENT SPECIFICATION

(45) Date of publication of patent specification: **07.09.88**

(51) Int. Cl.⁴: **B 60 H 1/24**

(21) Application number: **86100302.8**

(22) Date of filing: **11.01.86**

(54) **Device for distributing and diffusing climatization air to the rear seats of passenger cars.**

(30) Priority: **21.01.85 IT 5286485 u**

(43) Date of publication of application:
**30.07.86 Bulletin 86/31**

(45) Publication of the grant of the patent:
**07.09.88 Bulletin 88/36**

(84) Designated Contracting States:
**DE FR GB**

(56) References cited:
**EP-A-0 118 680**
**BE-A- 469 934**
**CH-A- 326 097**
**DE-A-3 309 560**
**DE-U-1 929 373**
**FR-A-2 009 111**
**FR-A-2 489 217**
**GB-A- 952 953**
**US-A-1 658 881**
**US-A-2 892 319**
**US-A-2 969 725**

(73) Proprietor: **FOGGINI PROGETTI S.r.l.**
**Via Aosta, 17**
**I-10092 Beinasco Torino (IT)**

(72) Inventor: **Foggini, Paolo**
**Strada Moncalieri, 2**
**I-10020 Revigliasco Torinese (IT)**

(74) Representative: **Modiano, Guido et al**
**MODIANO, JOSIF, PISANTY & STAUB Modiano**
**& Associati Via Meravigli, 16**
**I-20123 Milan (IT)**

Courier Press, Leamington Spa, England.

## Description

The present invention relates to a device for distributing and diffusing climatization air to the rear seats of passenger cars.

The task of the present invention is to provide a device of minimum bulk, high efficiency, and particular convenient use by occupants of said rear seats.

The device according to the invention is characterized by an intercepting and throttling member including a hollow cylindrical shutter rotatably contained in a corresponding containment seat located vertically substantially at the backrests of the front seats and provided with at least one dispensing window oriented toward the rear seats of the passenger car; and by a climatization air supply conduit, formed in the object-holder pouch of the front door, in communication on the one side with a delivery hose extending from the car climatization assembly, and on the other side with the interior of said shutter.

Advantageously, the containment seat of the shutter is cylindrical with vertical axis and is provided on the rigid lining of each car upright intermediate to the two front and rear doors. If the passeger car is of the two-door type — and also where dictated by particular size requirements — said seat is incorporated directly to the lining of each front door at the end of said object-holder pouch.

The invention will be more clearly understood from the following detailed description, with reference to the accompanying drawings, where:

Figure 1 is a perspective view of a passenger car interior equipped with the device according to the invention; and

Figure 2 is a sectional view taken along the line II—II of Figure 1.

In the drawings, indicated at 10 is the object-holder pouch formed in, or bonded to, the rigid lining R of the front doors PA of passenger cars.

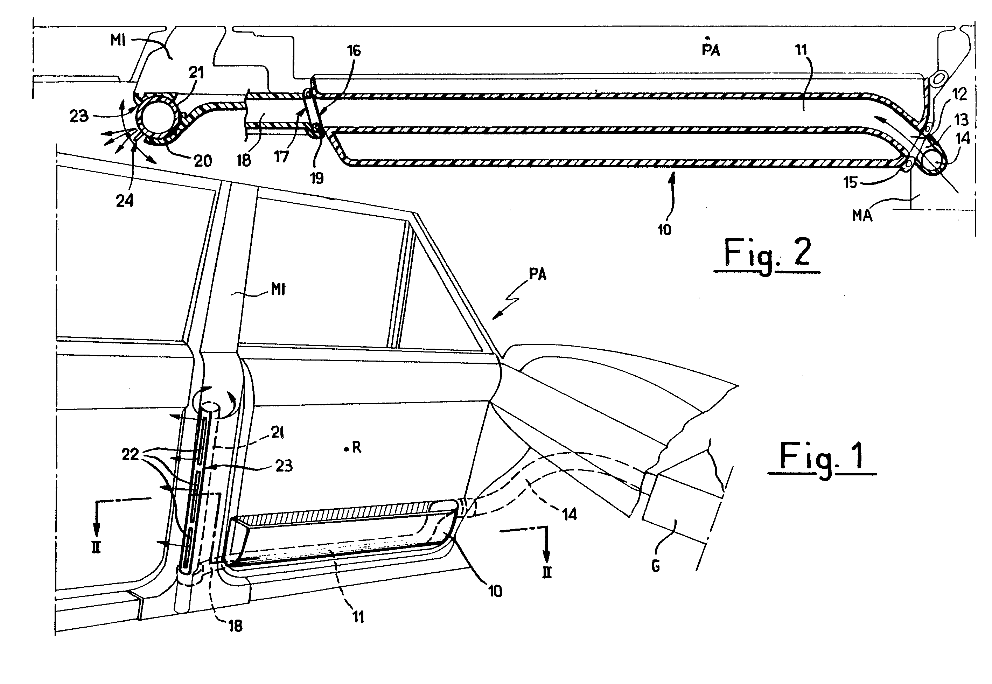

According to the present invention in one of the walls which define the poch 10, advantageously in the bottom wall, a longitudinal conduit 11 is formed, which extends over the full length of the pouch, from the front side to the rear side of the door PA. On the front side, the conduit 11 open at an inlet section 12 slightly sloping, as shown in Figure 2, which, with the door shut, is aligned to a corresponding air dispensing outlet 13 provided on the front upright MA of the door and connected to the climatization assembly G by a hose 14.

A tubular elastomeric gasket 15 is interposed between said inlet section and dispensing outlet to provide a seal.

On the rear side, the conduit 11 is terminated with an outlet section 16 which, with the door shut, is aligned to the inlet opening 17 of a connection channel 18 formed at the bottom of the rigid lining of the intermediate upright MI. A tubular elastomeric gasket 19 provides a seal between said outlet section 16 and inlet opening 17. The connection channel 18 is terminated at the bottom of a vertical axis tubular cylindrical containment seat 20 located substantially at the backrests of the front seats. Advantageously, the seat 20 is formed in the lining of the upright MI, preferably integrally therewith, and extends vertically over a distance slightly smaller than the length of the upright portion underlying the windows.

Contained freely rotatably in the cylindrical seat 20 is a hollow cylindrical shutter 21 the bottom end whereof is open to communicate with the connection channel 18.

At the surface of the shutter 21 there are provided slots 22 for dispensing the air being fed into the shutter itself, which may be moved into true or partial alignment to one or more windows 23 provided on the wall of the cylindrical seat 20, or at a concealed location with respect to said windows, for the purpose of full or throttled delivery, or of interception of the airflow, respectively. The slots 22 may be provided in any variable number and variously contoured, in particular with a helical contour to allow the flow to be distributed vertically at set elevations which may vary with the angular rotation of the shutter 21; a small handle 24 is provided at the top end of the shutter to control the rotation of the same.

With passenger cars of the two-door type — and wherever dictated by special requirements — the cylindrical seat 20 will be provided directly on the lining of the front door PA at the extremity of the object-holder pouch 10.

## Claims

1. A device for distributing and diffusing climatization air to rear sests of passenger cars, characterised by an intecepting and throttling member including a hollow cylindrical shutter (21) rotatably contained in a corresponding containment seat (20) located vertically substantially at the backrests of the front seats and provided with at least one dispensing window (23) oriented toward the rear seats of the passenger car; and by climatization air supply conduit (11) formed in the object-holder pouch (10) of the front door (PA), in communication on the one side with a delivery hose (14) extending from the car climatization assembly (G), on the other side with the interior of said shutter (21).

2. A device according to Claim 1, characterised in that the containment seat (20) for the shutter (21) is cylindrical with vertical axis and is provided on the rigid lining of each car intermediate upright (MI) and in that the supply conduit (11) extends rearwards through the object-holder pouch (10) and aligns through the door shut with a connection channel (18) provided at the bottom of said intermediate upright lining (MI) and in communication with the interior of said shutter (21).

3. A device according to Claim 1, wherein the containment seat (20) is provided at the terminating rear end of the object-holder pouch (10) in the lining of said car intermediate upright (MI).

4. A device according to the preceding claims, wherein the supply conduit (11) formed in the object-holder pouch (10) is provided forwards with an inlet section (12) which is in communication through the door shut, with an air dispensing outlet (13) provided on the front upright (MA) of said front door (PA) and connected to said car climatization assembly (G) through said hose (14).

5. A device according to the preceding claims, characterised in that said cylindrical shutter (21) is provided with at least one set of slots (22) which, through rotation of said shutter by means of a small handle (24), can be selectively moved into alignment to said window (23) of said containment seat (20) or concealed by said window fully or in part for dispensing, throttling, or intercepting the airflow.

6. A device according to Claim 5, characterised in that said slots (22) are at least part-helical thereby to vary, by rotation of said shutter (21), the airflow delivery elevation.

## Patentansprüche

1. Vorrichtung für die Verteilung und Diffusion klimatisierter Luft zu den hinteren Sitzen von Personenfahrzeugen, gekennzeichnet durch ein Absperr- und Drosselglied umfassend eine hohle zylindrische Blende (21), die drehbar in einem entsprechenden Aufnahmesitz (20) enthaltend ist, der vertikal im wesentlichen in den Rückenlehnen der Vordersitze angeordnet und mit wenigstens einem Abgabefenster (23) versehen ist, das gegen die hinteren Sitze des Personenwagens orientiert ist; und durch einen Zufuhrkanal (11) für die klimatisierte Luft, der in der Ablagetasche (10) der vorderen Tür (PA) ausgebildet ist und an einer Seite mit einem Zuführungsschlauch (14), der sich von der Klimaanlage (G) des Wagens weg erstreckt, und an der anderen Seite mit dem Inneren der genannten Blende (21) in Verbindung steht.

2. Vorrichtung nach Anspruch 1, dadurch gekennzeichnet, daß der Aufnahmesitz (20) für die Blende (21) zylindrisch mit Vertikalachse ist und an der starren Verkleidung einer jeden Mittelstrebe (MI) des Fahrzeuges vorgesehen ist und daß sich der Zufuhrkanal (11) nach hinten durch die Ablagetasche (10) erstreckt und durch die Tür geschlossen mit einem Verbindungskanal (18) verbunden ist, der am Boden der genannten Verkleidung der Mittelstrebe (MI) vorgesehen ist und mit dem Inneren der genannten Blende (21) in Verbindung steht.

3. Vorrichtung nach Anspruch 1, dadurch gekennzeichnet, daß der Aufnahmesitz (20) am hinteren abschließenden Ende der Ablagetasche (10) in der Verkleidung der Mittelstrebe (MI) des Fahrzeuges vorgesehen ist.

4. Vorrichtung nach den vorhergehenden Ansprüchen, dadurch gekennzeichnet, daß der in der Ablagetasche (10) ausgebildete Zufuhrkanal (11) vorne mit einem Einlaßabschnitt (12) versehen ist, der durch die Tür geschlossen mit einem Luftabgabeauslaß (13) in Verbindung steht, der an der vorderen Strebe (MA) der vorderen Tür (PA) vorgesehen und über den genannten Schlauch (14) mit der Klimaanlage (G) des Fahrzeuges verbunden ist.

5. Vorrichtung nach den vorhergehenden Ansprüchen, dadurch gekennzeichnet, daß die zylindrische Blende (21) mit wenigstens einem Satz von Schlitzen (22) versehen ist, die durch Drehen der Blende mittels eines kleinen Handgriffes (24) selektiv in Fluchtung mit dem Fenster (23) des Aufnahmesitzes (20) bewegt oder durch das Fenster ganz oder teilweise zur Abgabe, Drosselung oder Sperrung des Luftstromes gedeckt werden können.

6. Vorrichtung nach Anspruch 5, dadurch gekennzeichnet, daß die Schlitze (22) wenigstens teilspiralig sind, um dadurch bei Drehung der Blende (21) die Höhe der Luftstromabgabe zu variieren.

## Revendications

1. Dispositif pour distribuer et diffuser de l'air climatisé aux sièges arrière de voitures de tourisme, caractérisé par un organe d'interception et d'étranglement comprenant un volet obturateur creux et cylindrique (21) logé à rotation dans un réceptacle correspondant (20) situé verticalement sensiblement dans les dossiers arrière des sièges avant et pourvu d'au moins une fenêtre de distribution (23) orientée vers les sièges arrière de la voiture de tourisme; et par un conduit d'amenée d'air climatisé (11) formé dans le vide-poche (10) de la porte avant (PA), en communication d'un côté avec un tuyau souple de refoulement (14) relié au système de climatisation du véhicule (G), de l'autre côté avec l'intérieur dudit volet obturateur (21).

2. Dispositif selon la revendication 1, caractérisé en ce que le réceptacle (20) pour le volet obturateur (21) est cylindrique avec un axe vertical et est disposé sur la garnissage rigide de chaque montant intermédiaire (MI) et en ce que le conduit d'amenée (11) s'étend vers l'arrière à travers le vide-poche (10) et s'aligne à travers la fermeture de porte avec un canal de connexion (18) disposé au bas dudit garnissage de montant intermédiaire (MI) et en communication avec l'intérieur dudit volet obturateur (21).

3. Dispositif selon la revendication 1, dans lequel le réceptacle (20) est disposé au bout de l'extrémité arrière du vide-poche (10) dans le garnissage dudit montant intermédiaire de la voiture (MI).

4. Dispositif selon les revendications précédentes, dans lequel le conduit d'amenée (11) formé dans le vide-poche (10) est pourvu vers l'avant d'une section d'alimentation (12) qui est en communication à travers la fermeture de la porte, avec un orifice de distribution d l'air (13) disposé dans le montant avant (MA) de ladite porte avant (PA) et connecté audit système de climatisation de la voiture (G) à travers ledit tuyau souple (14).

5. Dispositif selon les revendications précédentes, caractérisé en ce que ledit volet obturateur cylindrique (21) est pourvu d'au moins un jeu de fentes (22) qui, par rotation dudit volet obturateur au moyen d'une peite poignée (24), peuvent être sélectivement déplacées en alignement de ladite fenêtre (23) dudit réceptacle (20) ou masquées par ladite fenêtre complétement ou partiellement pour diffuser, étrangler, ou intercepter le flux d'air.

6. Dispositif selon la revendication 5, caractérisé en ce que lesdites fentes (22) sont au moins en partie en hélice pouvant ainsi réguler, par rotation dudit volet obturateur (21), la hauteur du débit de flux d'aération.

Fig. 2

Fig. 1